# EUROPÄISCHE PATENTSCHRIFT

(11) **EP 1 051 358 B1**
(45) Veröffentlichungstag und Bekanntmachung des Hinweises auf die Patenterteilung: **04.08.2004**
(21) Anmeldenummer: 99907359.6
(22) Anmeldetag: 09.01.1999
(51) Int. Cl.: C02F 1/32, E03C 1/04

(54) **EINRICHTUNG ZUM ENTKEIMEN VON WASSER, WELCHES EINE sanitäre Auslaufarmatur DURCHSTRÖMT**
DEVICE FOR DEGERMINATING WATER FLOWING THROUGH A SANITARY fitting
DISPOSITIF POUR STERILISER L'EAU QUI TRAVERSE UNE robinetterie SANITAIRE

(30) Priorität: 28.01.1998 DE 19803073
(43) Veröffentlichungstag der Anmeldung: 15.11.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Ulrich, Dr.
(86) Internationale Anmeldenummer: PCT/EP1999/000091
(87) Internationale Veröffentlichungsnummer: WO 1999/038805

(56) Entgegenhaltungen:
- EP-A- 0 806 526
- WO-A-91/08354
- WO-A-98/28496
- PATENT ABSTRACTS OF JAPAN vol. 096, no. 007, 31. Juli 1996 -& JP 08 066677 A (HONDA HAJIME), 12. März 1996
- PATENT ABSTRACTS OF JAPAN vol. 095, no. 002, 31. März 1995 & JP 06 320153 A (NISSEI KOGYO KK), 22. November 1994
- PATENT ABSTRACTS OF JAPAN vol. 014, no. 184 (C-0709), 13. April 1990 & JP 02 031883 A (ATSUO YOSHIDA;OTHERS: 01), 1. Februar 1990
- PATENT ABSTRACTS OF JAPAN vol. 018, no. 323 (M-1624), 20. Juni 1994 -& JP 06 073764 A (TOTO LTD), 15. März 1994

## Beschreibung

Die Erfindung betrifft eine Einrichtung zum Entkeimen von Wasser, welches eine sanitäre Auslaufarmatur durchströmt, nach dem Oberbegriff des Patentanspruchs 1.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe kann eine zusätzliche Filtervorrichtung eingesetzt werden.

Aus Patent Abstracts of Japan, Vol. 096, No. 007, 31. Juli 1996, sowie JP 08066677 A und aus Patent Anstracts of Japan, Vol. 095, No. 002, 31. März 1995, sowie JP 06 320153 A sind Einrichtungen der im Oberbegriff des Patentanspruches 1 angegebenen Art bekannt. Bei diesen handelt es sich nicht um normale Sanitärarmaturen, wie sie im täglichen Gebrauch eingesetzt werden, bei denen die Auslauföffnung von einem Luftsprudler gebildet ist.

Aufgabe der vorliegenden Erfindung ist es, eine Einrichtung der eingangs genannten Art so auszugestalten, daß eine zuverlässige Entkeimung des aus den gebräuchlichen sanitären Auslaufarmaturen strömenden Wassers gewährleist ist.

Diese Aufgabe wird mit den im Patentanspruch 1 angegebenen Mitteln gelöst.

Die Auslauföffnungen gebräuchlicher sanitärer Auslaufarmaturen werden regelmäßig von sogenannten "Luftsprudlern" gebildet, in denen das ausströmende Wasser mit Luft angereichert wird. Die die Luftanreicherung bewirkenden inneren Elemente derartiger Luftsprudler, im allgemeinen Siebe, neigen im Laufe der Zeit dazu, sich mit Verunreinigungen zuzusetzen, und bilden daher einen idealen Nährboden für Bakterien. Erfindungsgemäß wird aus diesem Grunde die UV-Lampe in ihrem äußeren Bereich so nahe an den Luftsprudler herangeführt, daß dessen luftanreichernde Elemente von innen her mit UV-Strahlung beaufschlagt wird. Alle sich hier eventuell ansiedelnden Mikroorganismen können auf diese Weise abgetötet werden, so daß das den Luftsprudler durchtretende Wasser tatsächlich vollständig keimfrei ist.

Bei handelsüblichen Luftsprudlern bestehen die luftanreichernden Elemente im allgemeinen aus metallischen Sieben, welche für die entkeimende UV-Strahlung nicht durchlässig sind. Möglicherweise könnte zwar durch Mehrfachreflektion an den metallischen Oberflächen ein Großteil des inneren Volumens derartiger bekannter Luftsprudler erreicht werden; zuverlässiger ist die entkeimende Wirkung der UV-Lampe jedoch, wenn erfindungsgemäß statt der üblichen metallischen inneren Elemente ein geeigneter, für UV-Strahlung durchlässiger Kunststoff eingesetzt wird. In diesem Falle tritt die von der UV-Lampe ausgehende UV-Strahlung in das Material der inneren, luftanreichernden Elemente des Luftsprudlers ein und wird innerhalb dieser nach Art eines Lichtleiters an alle Bereiche von deren Oberfläche geführt; dort kann sie ihre entkeimende Strahlung, auch weit weg von der Eintrittsstelle des UV-Lichtes entfalten.

Obwohl die Intensität des UV-Lichtes, welches den Luftsprudler durchtritt und nach außen gelangen kann, nicht allzu hoch ist, empfiehlt es sich zum Schutze des Benutzer wenn die äußerste Schicht der die Luftanreicherung bewirkenden inneren Elementes des Luftsprudlers aus einem für UVC-Strahlung nicht durchlässigen Material besteht. Das gesamte UVA-, UVB- und UVC-Strahlung umfassende UV-Licht, welches von der UV-Lampe abgegeben wird, kann dann den Luftsprudler bis zu dieser äußersten Schicht durchdringen. Nach außen gelangt dann allerdings nur noch die UVA- und UVB-Strahlung, welche für den Benutzer unschädlich ist.

Alternativ hierzu ist es auch möglich, daß die die Luftanreicherung bewirkenden inneren Elemente des Luftsprudlers aus einem Material bestehen, welches für UVA- und UVB-Strahlung, nicht jedoch für UVC-Strahlung durchlässig ist bzw. diese leitet. Bei dieser Ausgestaltung der Erfindung tritt also das UVC-Licht, welches eine potentielle Gefahr darstellen könnte, gar nicht in die inneren Elemente des Luftsprudlers ein; die Entkeimung innerhalb des Luftsprudlers beruht ausschließlich auf der Wirkung der UVA- bzw. UVB-Strahlung.

Ein geeigneter Kunststoff für die die Luftanreicherung bewirkenden inneren Elemente des Luftsprudlers ist PTFE.

Besonders vorteilhaft ist, wenn das Material der die Luftanreicherung bewirkenden inneren Elemente des Luftsprudlers mit TiO₂ beschichtet ist. Dieser Stoff weist eine zusätzliche desinfizierende Wirkung auf und unterstützt auf diese Weise das UV-Licht.

Ein Ausführungsbeispiel der Erfindung wird nachfolgend anhand der Zeichnung näher erläutert; es zeigen:

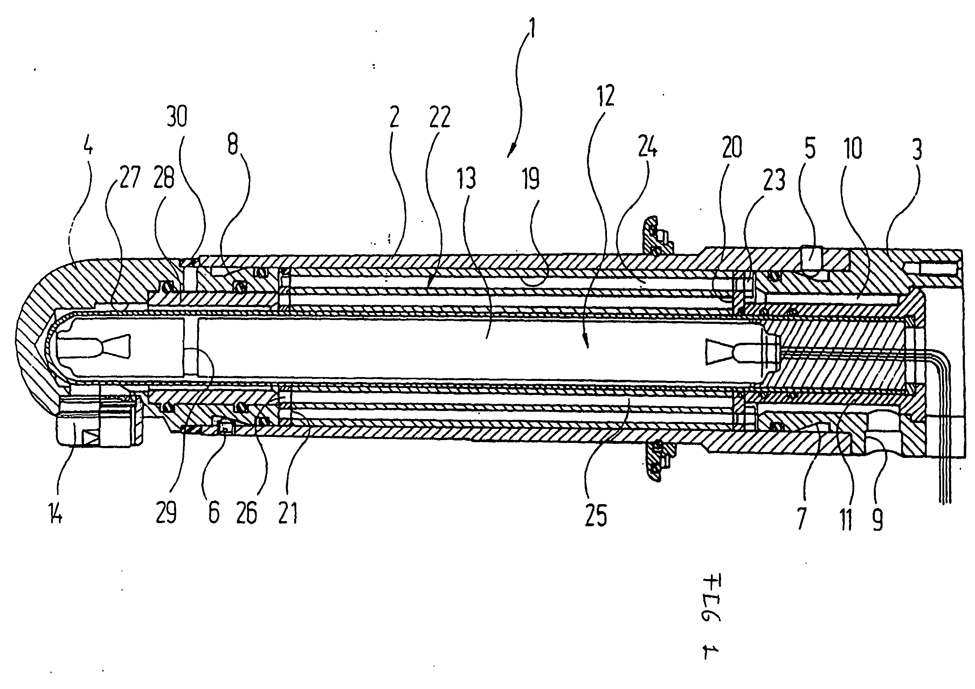

- Figur 1: einen Wannenauslauf, der mit einer Einrichtung zur Entkeimung und Filtrierung von durchlaufendem Wasser versehen ist;
- Figur 2: den Kopfbereich des Wannenauslaufs von Figur 1 in vergrößertem Maßstab;
- Figur 3: einen Schnitt durch Figur 2 gemäß Linie III-III;
- Figur 4: einen Schnitt durch Figur 2 gemäß Linie IV-IV;
- Figur 5: einen Schnitt durch Figur 2 gemäß Linie V-V.

Der Wannenauslauf, der insgesamt durch das Bezugszeichen 1 gekennzeichnet ist, umfaßt einen im wesentlichen hohlzylindrischen Gehäusemantel 2, der an seinem in der Figur rechten, der Gebäudewand benachbarten Ende durch einen Montagesockel 3 und an seinem gegenüberliegenden Ende durch einen Auslaufkopf 4 verschlossen ist. Montagesockel 3 und Auslaufkopf 4 sind jeweils durch eine den Gehäusemantel 2 durchdringende Madenschraube 5 bzw. 6 an dem Gehäusemantel 2 montiert, welche in eine Umfangsnut 7 bzw. 8 an dem Montagesockel 3 bzw. dem Auslaufkopf 4 eingreift.

Der Montagesockel 3 weist eine parallel zur nicht dargestellten Montagewand verlaufende Wasserzulauföffnung 9 auf, die in einen Wasserzulaufraum 10 einmündet. Der Wasserzulaufraum 10 umgibt ringförmig einen Aufnahmesockel 11 für eine UV-Lampe 12, deren Leuchtkörper 13 sich axial durch den gesamten Gehäusemantel 2 hindurch bis in den Auslaufkopf 4 und dort bis über den in diesem vorgesehenen, nach unten zeigenden, als Auslauföffnung dienenden Luftsprudler 14.

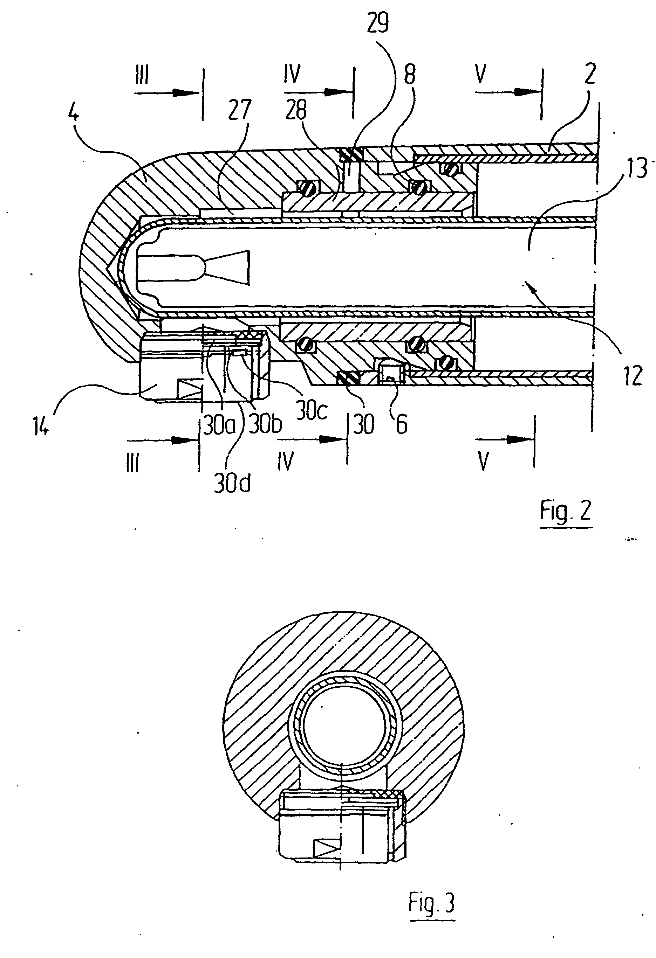

Innerhalb des zylindrischen Gehäusemantels 2 ist ein Behandlungsraum 19 ausgebildet, der an beiden Stirnseiten jeweils durch eine Zwischenplatte 20 bzw. 21 (in Figur 2 weggelassen) begrenzt ist. In dem Behandlungsraum 19 ist eine Filtervorrichtung 22 untergebracht, welche den Leuchtkörper 13 der UV-Lampe 12 ringförmig umgibt und ebenefalls in Figur 2 nicht dargestellt ist. Durchtrittsöffnungen 23 in der ersten Zwischenplatte 20 sorgen dafür, daß das über die Zulauföffnung 9 in den Wasserzulaufraum 10 zuströmende Wasser in einen ersten Teilraum 24 der Filtervorrichtung 22 strömt. Aus diesem durchtritt das Wasser einen filteraktiven Bereich der Filtervorrichtung 22 und gelangt in einen zweiten Teilraum 25, von wo es über Durchgangsöffnungen 26 der zweiten Zwischenplatte 21 in einen ringförmigen Auslaufraum 27 innerhalb des Auslaufkopfes 4 gelangt, welcher mit dem Luftsprudler 14 kommuniziert. Einzelheiten der Ausgestaltung der Filtervorrichtung 22 und der Wasserführung zwischen der Zulauföffnung 9 und dem Luftsprudler 14 sind hier nicht von Interesse.

In eine Erweiterung des nach rechts in der Zeichnung offenen Auslaufkopfes 4 ist ein Glasrohrstück 28 eingeschoben, welches den Leuchtkörper 13 der UV-Lampe 12 auf einem Stück ihrer axialen Länge umgibt. Es besteht aus einem Material, welches für UVC-Strahlung undurchlässig ist, und ist durch O-Ringe in der dargestellten Weise gegen den Auslaufkopf 4 abgedichtet.

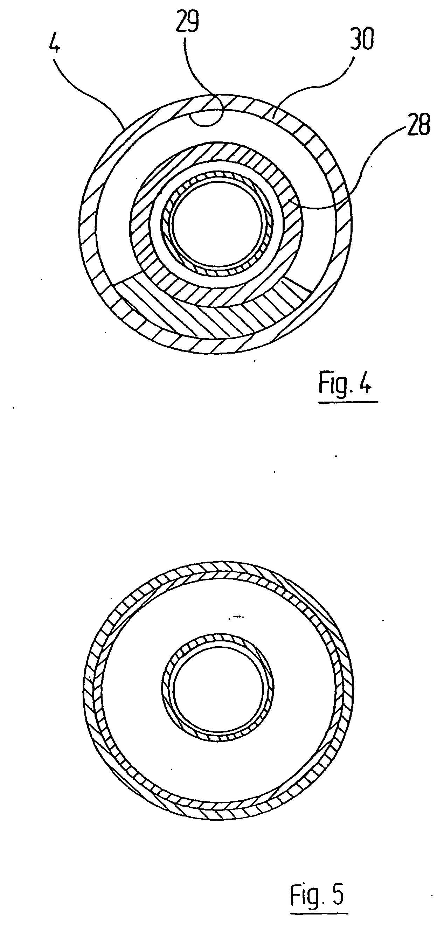

In demjenigen axialen Bereich, in welchem sich das Glasrohrstück 28 befindet, ist der Auslaufkopf 4 mit einem ringsegmentartigen Fenster 29 Vgl. Figur 4) versehen. Über diesem Fenster 29 ist ein Ring 30 aus einem transparenten, nicht notwendig klaren aber fluoreszierendem Kunststoffmaterial eingelegt. Dieser Ring 30 übernimmt gleichzeitig die Abdichtung zwischen dem hohlzylindrischen Gehäusemantel 2 und dem Auslaufkopf 4.

Wie bereits erwähnt, erstreckt sich der Leuchtkörper 13 der UV-Lampe 12 soweit in den Auslaufkopf 4 hinein, daß er die Innenseite des Luftsprudlers 14 bestrahlen kann. Dieser Luftsprudler 14 enthält in an und für sich bekannter Weise mehrere Siebe 30a, 30b, 30c, welche vom Wasser hintereinander durchströmt werden und der Anreicherung dieses Wassers mit angesaugter Luft dienen. Üblicherweise bestehen diese Siebe 30a, 30b, 30c aus einem Metallgeflecht. Im vorliegenden Falle werden die Siebe 30a, 30b, 30c jedoch aus einem Kunststoffmaterial hergestellt, welches für UVC-Licht durchlässig ist bzw. solches Licht leiten kann. Das in Strömungsrichtung letzte Sieb 30d, welches unmittelbar an der Auslauföffnung des Luftsprudlers 14 angeordnet ist, besteht dagegen in üblicher Weise aus einem metallischen Material oder ist an mindestens einer Seite mit einem UVC- undurchlässigen Material beschichtet.

Die Funktion der beschriebenen Einrichtung ist wie folgt:

Wird ein in der Zeichnung nicht dargestelltes Ventil geöffnet, so strömt Wasser über die Zulauföffnung 9 und den Wasserzulaufraum 10 in den Behandlungsraum 19 ein. Zu diesem Zeitpunkt ist in hier nicht interessierender Weise die UV-Lampe 12 bereits eingeschaltet. Das Wasser, welches über den ersten Teilraum 24 der Filtervorrichtung 22, den filteraktiven Bereich der Filtervorrichtung 22, den zweiten Teilraum 25 und über die Durchgangsöffnungen 26 der zweiten Zwischenplatte 21 zum Auslaufraum 27 und von dort zum Luftsprudler 14 fließt, wird also von den Strahlen, welche die UV-Lampe 12 aussendet, erreicht. Hierin befindliche Mikroorganismen werden abgetötet. Beim Durchströmen der Filtervorrichtung 22 werden diese Mikroorganismen außerdem zurückgehalten.

Der vorderste Bereich der UV-Lampe 12 sendet UVC-Licht über die zum Luftsprudler 14 führende Bohrung im Auslaufkopf 4 in die verschiedenen Siebe 30a, 30b, 30c und 30d des Luftsprudlers 14 hinein. Da diese, wie oben erwähnt, gegebenenfalls mit Ausnahme des letzten Siebes 30d, aus einem UVC-durchlässigen bzw. -leitenden Material bestehen, können die UVC-Strahlen in die Siebe selbst hineintreten, werden entlang der Sieb-"Drähte" zu den Verschmutzungen geleitet, können dort austreten und die in den Sieböffnungen und an den Sieb-"Drähten" haftenden Verschmutzungen in effektiver Weise reinigen.

Da das in Strömungsrichtung letzte Sieb 30d keine UVC-Strahlung aus dem Luftsprudler 14 austreten läßt, sind die Benutzer vor einer derartigen Strahlung geschützt.

Muß die Filtervorrichtung 22 ausgewechselt werden, kann der Auslaufkopf 4 einfach nach Lösen der Madenschraube 6 von dem Gehäusemantel 2 abgezogen werden, worauf die zweite Zwischenplatte 21 freiliegt. Diese kann jetzt aus dem Gehäusemantel 2 herausgezogen werden. Nun ist die Filtervorrichtung 22 zum Auswechseln zugänglich. Die Wiedermontage der verschiedenen Teile erfolgt in umgekehrter Reihenfolge.

## Patentansprüche

1. Einrichtung zum Entkeimen von Wasser, welches eine sanitäre Auslaufarmatur (1) durchströmt, mit einer UV-Lampe (12), deren Strahlung auf das durchströmende Wasser gerichtet ist, die im Auslaufgehäuse (2, 4) der sanitären Auslaufarmatur (1) angeordnet ist und sich so weit in das der Auslauföffnung benachbarte Ende des Auslaufgehäuses (2, 4) hineinerstreckt, daß von der UV-Lampe (12) ausgehende UV-Strahlung die Auslauföffnung von innen her bestrahlt,
**dadurch gekennzeichnet, daß**
die Auslauföffnung von einem Luftsprudler (14) gebildet ist und die die Luftanreicherung bewirkenden inneren Elemente (30a bis 30c) des Luftsprudlers (14) zumindest teilweise aus einem Material hergestellt sind, welches für UV-Strahlung durchlässig ist bzw. diese leitet.

2. Einrichtung nach Anspruch 1, **dadurch gekennzeichnet, daß** die äußerste Schicht der die Luftanreicherung bewirkenden inneren Elemente (30a bis 30d) des Luftsprudlers (14) aus einem für UVC-Strahlung nicht durchlässigen Material besteht.

3. Einrichtung nach Anspruch 1, **dadurch gekennzeichnet, daß** die die Luftanreicherung bewirkenden inneren Elemente (30a bis 30d) des Luftsprudlers (14) aus einem Material bestehen, welches für UVA- und UVB-Strahlung, nicht jedoch für UVC-Strahlung, durchlässig ist bzw. diese leitet.

4. Einrichtung nach einem der Ansprüche 1 bis 3, **dadurch gekennzeichnet, daß** das Material PTFE ist.

5. Einrichtung nach einem der Ansprüche 1 bis 4, **dadurch gekennzeichnet, daß** das Material der die Luftanreicherung bewirkenden inneren Elemente (30a bis 30d) des Luftsprudlers (14) mit TiO₂ beschichtet ist.

## Claims

1. Device for degerminating water flowing throug a sanitary outlet fitting (1) comprising a UV lamp (12) whose radiation is directed toward the water flowing through, and which is arranged in the outlet housing (2, 4) of the sanitary outlet fitting (1) and extends so far into that end of the outlet housing (2, 4) adjacent to the outlet opening that UV radiation emitted by the UV lamp (12) radiates the outlet opening from the inside, **characterized in that** the outlet opening is formed by an air bubbler (14) and the aerating inner elements (30a to 30c) of the air bubbler (14) are at least partially made of a material which is permeable to or conducts UV radiation.

2. Device according to claim 1, **characterized in that** the outermost layer of the aerating inner elements (30a to 30d) of the air bubbler (14) consists of a material which is not permeable to UVC radiation.

3. Device according to claim 1, **characterized in that** the aerating inner elements (30a to 30d) of the air bubbler (14) consist of a material which is permeable to or conducts UVA and UVB radiation, but not UVC radiation.

4. Device according to one of the claims 1 to 3, **characterized in that** the material is PTFE.

5. Device according to one of the claims 1 to 4, **characterized in that** the material of the aerating inner elements (30a to 30d) of the air bubbler (14) is coated with TiO₂.

## Revendications

1. Dispositif pour stériliser l'eau qui traverse une robinetterie sanitaire (1), avec une lampe à UV (12) dont le rayonnement est dirigé vers l'eau qui traverse, qui est disposée dans le corps (2, 4) de la robinetterie sanitaire (1) et qui s'étend assez loin dans l'extrémité du corps (2, 4) proche de l'orifice d'écoulement pour que le rayonnement UV émis par la lampe à UV (12) éclaire l'orifice d'écoulement de l'intérieur,
**caractérisé par le fait que**
l'orifice d'écoulement est formé d'un brise-jet (14) et les éléments internes du brise-jet (14) produisant l'enrichissement en air (30a à 30c) sont réalisés au moins partiellement dans un matériau qui est perméable au rayonnement UV ou le conduit.

2. Dispositif selon la revendication 1, **caractérisé par le fait que** la couche la plus externe des éléments internes du brise-jet (14) produisant l'enrichissement en air (30a à 30d) est réalisée dans un matériau non perméable au rayonnement UVC.

3. Dispositif selon la revendication 1, **caractérisé par le fait que** les éléments internes du brise-jet (14) produisant l'enrichissement en air (30a à 30d) sont réalisés dans un matériau qui est perméable au rayonnement UVA et UVB ou le conduit, mais non perméable au rayonnement UVC et ne le conduisant pas.

4. Dispositif selon l'une des revendications 1 à 3, **caractérisé par le fait que** le matériau est du PTFE.

5. Dispositif selon l'une des revendications 1 à 4, **caractérisé par le fait que** le matériau des éléments internes du brise-jet (14) produisant l'enrichissement en air (30a à 30d) est couvert d'une couche de TiO₂.
